# EUROPEAN PATENT APPLICATION

(11) **EP 1 123 882 A1**
(43) Date of publication of application: **16.08.2001**
(21) Application number: 00310438.7
(22) Date of filing: 24.11.2000
(51) Int. Cl.: B65G 43/08

(54) **Delivery system with buffer and method controlling same**

(30) Priority: 29.12.1999 US 474621
(71) Applicant: Visteon Global Technologies, Inc., Dearborn, Michigan 48126-2490 (US)
(72) Inventor: Crutchfield, Thomas Steven, Dearborn, MI 48124 (US); Ciesielski, Chester Alan, Canton, MI 48187 (US); Carter, Joseph Wade, Bolleville, MI 48111 (US)
(74) Representative: Gemmell, Peter Alan, Dr.

(57) **Abstract**

An apparatus and a method for delivering parts such as heater cores (10) from a plurality of sources (22) to a main conveyor (21, 22) to be transported to a destination includes an inventory buffer system (29) for each source to assure a constant delivery rate. The inventory buffer system (29) has a storage conveyor (30) for holding a limited supply of the parts (10) and a controller (39) for discharging one of the parts onto the main conveyor when an available space is sensed. The controller selectively discharges the parts to maintain an actual average cycle time equal to a desired cycle time. The storage conveyor (30) also orients the parts before discharge to facilitate efficient processing of the parts at the destination.

## Description

### BACKGROUND OF THE INVENTION

The present invention relates generally to an apparatus and a method for delivering parts at a constant rate and in a desired orientation to a processing station from a plurality of sources along a production line. It is known to utilize an inclined roller conveyor to move objects from a source to a destination in a manufacturing process. In addition, conveyors having a movable section have been used to selectively discharge objects from the conveyor by, for example, lowering one end of the movable section.

Many devices are known for selectively releasing objects from a source onto a main conveyor. Typically, mechanical or electrical timers are used to control the discharge rate to space the objects on the conveyor and coordinate the discharges from two or more sources. However, such devices can not efficiently control the discharges to provide a constant delivery rate for the main conveyor when the sources have different or constantly varying cycle times and/or objects are randomly removed before they can be discharged.

### SUMMARY OF THE INVENTION

The present invention concerns a system for delivering parts from a plurality of sources to a destination including a main conveyor for moving a plurality of parts to a destination, a plurality of sources of the parts and a plurality of inventory buffer systems, each inventory buffer system being associated with one of the sources for receiving the parts from the associated source and selectively discharging the parts onto the main conveyor. Each of the inventory buffer systems has an associated space sensor for sensing an available space on the main conveyor and generating a first signal representing the available space, an associated part sensor for sensing the parts received from the associated source and generating a second signal representing the received parts, and a controller connected to the associated space sensor and the associated part sensor whereby the controller responds to the first signal and the second signal to discharge at least one of the parts onto the main conveyor in the available space.

Each of the inventory buffer systems includes a roller conveyor inclined downwardly from an upper entry end adjacent the associated source to a lower discharge end adjacent the main conveyor and a pair of spaced apart guide rails extending above the roller conveyor parallel to a direction of travel of the parts for engaging and orienting the parts received from the associated source. The roller conveyor includes a movable section adjacent the main conveyor and an actuator attached to the movable section, the controller being connected to the actuator for moving the movable section from a first position to a second position to discharge the parts onto the main conveyor. The controller includes means for calculating an actual average cycle time by dividing a running time by a number a discharges of the parts from the inventory buffer system and actuates the inventory buffer system to discharge at least one of the parts when the actual average cycle time is at least equal to a predetermined cycle time.

It is an object of the present invention to provide a small buffer inventory of parts at each of a plurality of work stations supplying parts to a destination to compensate for minor cycle variations without affecting the total throughput.

It is another object of the present invention to regulate the release of parts from a plurality of work stations to provide a steady process flow to a destination for the parts.

It is a further object of the present invention to properly orient parts being discharged from a work station to a main conveyor.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Fig. 1 is a top plan view of a conventional heater core for vehicles to be delivered by the apparatus and method in accordance with the present invention;
Fig. 2 is an end view of the heater core shown in the Fig. 1;
Fig. 3 is a schematic plan view of production lines for fabricating and delivering heater cores of the type shown in the Fig. 1;
Fig. 4 is a schematic elevation view of a portion of one of the production lines shown in the Fig. 3 together with a part delivery system in accordance with the present invention;
Fig. 5 is a schematic plan view of the guide rail shown in the Fig. 4; and
Fig. 6 is a flow diagram of a method for controlling the part delivery system shown in the Fig. 4.

### DESCRIPTION OF THE PREFERRED EMBODIMENT

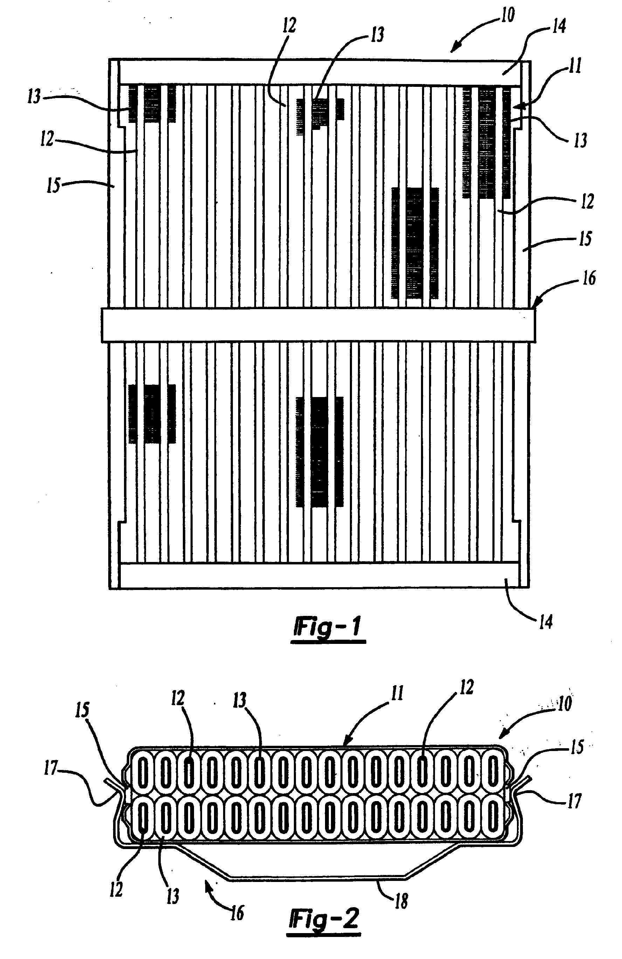

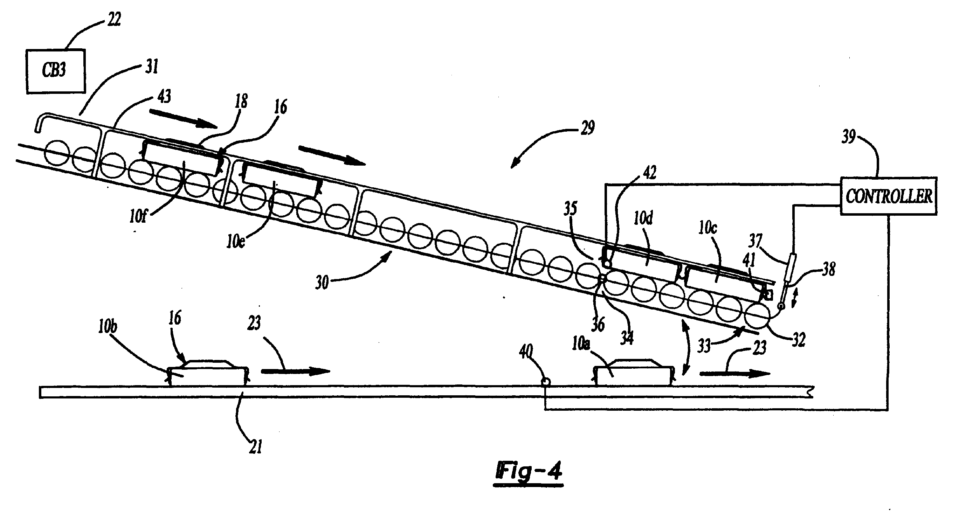

The present invention can be utilized to control any manufacturing process in which it is desirable to deliver parts from one station to another at a substantially constant rate. The invention is described below in the context of a vehicle heater core production line in which heater cores are fabricated at a plurality of core build stations (the parts source) and delivered to an aqueous degreaser and a furnace (the parts destination) by one or more conveyors. A typical vehicle heater core 10 is shown in the Figs. 1 and 2 as having a body 11 assembled from a plurality of tubes 12 through which engine cooling fluid will flow. The tubes 12 are aligned in two parallel rows and attached to a plurality of fins 13, a pair of headers 14 at opposite ends and a pair of side supports 15. A generally U-shaped braze clamp 16 extends horizontally across the body 11 midway between and parallel to the headers 14 and has opposite ends 17 that curl around the tubes 12 at each end of one row to attach to the side supports 15. A central portion 18 of the braze clamp 16 is spaced from the heater core body 11. The braze clamp 16 has a width substantially narrower than the distance between the headers 14.

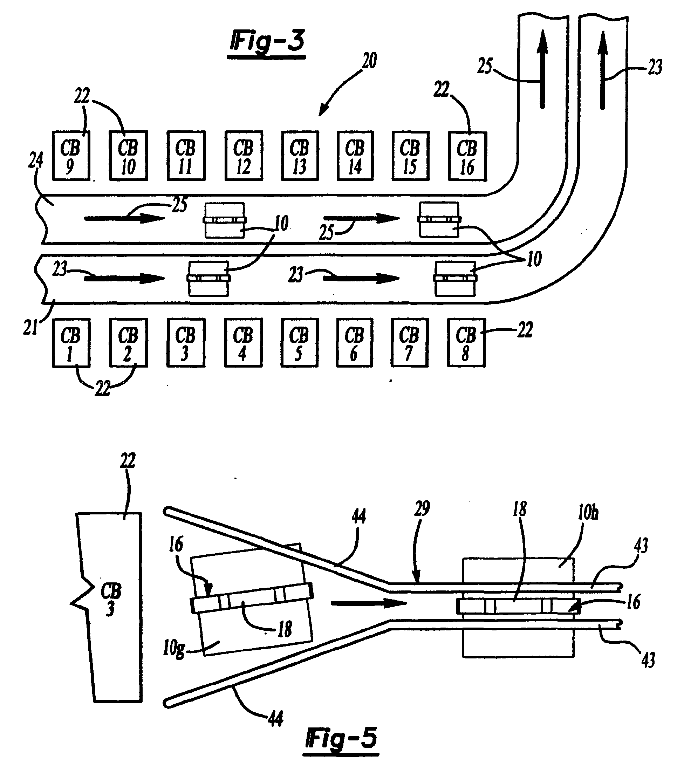

The heater core 10 is fabricated in a conventional manner using a semi-automatic core building machine under the supervision of a human operator. There is shown in the Fig. 3 a typical production layout 20 wherein two production lines are operated side-by-side. A first production line has a first conveyor 21 extending along a row of core building machines 22, for example machines "CB1" through "CB8". The conveyor 21 receives the heater cores 10 from the machines 22 in the manner described below and transports the heater cores in a direction indicated by arrows 23 to an aqueous degreaser (not shown) and a furnace (not shown). Similarly, a second production line has a second conveyor 24 extending parallel to the first conveyor 23 along another row of the core building machines 22, for example machines "CB9" through "CB16". The conveyor 24 receives the heater cores 10 from the machines 22 in the manner described below and transports the heater cores in a direction indicated by arrows 25 to an aqueous degreaser (not shown) and a furnace (not shown).

Typically, the furnace (not shown) runs at a fixed rate that requires a steady supply of parts in the form of the heater cores 10. However, variations in the cycle times of the core building machines 22, both from machine to machine and from cycle to cycle of each machine, as well as instances when the cores 10 are removed from the production lines before reaching the aqueous degreaser, make it difficult to achieve a steady flow of the parts into the furnace. The present invention makes it possible to maintain a steady flow of the cores 10 over a wide variation in the machine build cycles and core removals.

In accordance with the present invention, each of the core building machines 22 can be provided with an inventory buffer system 29 (Fig. 4) in the form of a storage conveyor and controller to control the discharge of the heater cores 10 onto the associated one of the main conveyors 21 and 24. As shown in the Fig. 4, for example, the inventory buffer system 29 is positioned relative to the core building machine "CB3" 22 to place the fabricated heater cores 10 at an upper entry end 31 of an inclined roller conveyor 30 spaced above the horizontal plane of the first conveyor 21. The roller conveyor 30 extends at an angle to the horizontal from the upper end 31 to a lower discharge end 32. The discharge end 32 is a free end of a movable section 33 having an opposite end 34 attached to a lower end 35 of the remainder of the roller conveyor 30.

The adjacent ends 34 and 35 are pivotally connected at a pivot point 36 such that the discharge end 32 can be lowered to place one of the heater cores 10 on the upper surface of the main conveyor 21. An actuator 37, in the form of a pneumatic or hydraulic cylinder, has a rod 38 attached to the free end 32 and is fixed relative to the conveyor 30. A controller 39 is connected to the actuator 37 for extending the rod 38 to lower the free end 32 toward the main conveyor 21 and retracting the rod to raise the free end to the position shown in the Fig. 4.

Heater cores 10a and 10b are shown supported on the upper surface of the main conveyor 21 and being moved past the core build machine "CB3" 22 in the direction of the arrow 23. The heater cores 10a and 10b each were built by one or the other of the core build machines "CB1" and "CB2". A space sensor 40 is positioned adjacent the conveyor 21 "upstream" from the discharge end 32 and is connected to the controller 39. The space sensor 40 generates a signal to the controller 39 that represents an open space on the conveyor 21 into which a heater core can be inserted to maintain a steady flow of parts into the aqueous degreaser. The sensor 40 schematically represents a suitable device such as a photoelectric eye that can have a field of vision wide enough to detect a space between the cores 10a and 10b sufficient to accept another core from the storage conveyor 30. Alternatively, the sensor 40 can include two or more photoelectric eyes spaced apart along the conveyor 21 for detecting the spacing between the cores.

The core build machine "CB3" 22 is shown as having deposited heater cores 10c, 10d, 10e and 10f on the storage conveyor 30. The cores move from the upper end 31 to the lower end 32 by gravity and are held by a stop 41 positioned at the lower end. When the actuator 37 extends the rod 38, the stop 41 is actuated to release the first core in line, the core 10c, for deposit on the main conveyor 21. A core sensor 42 is positioned adjacent the movable section 33 and is connected to the controller 39 for generating a signal that represents the presence of a core available for deposit on the main conveyor 21.
Although the core sensor 42 is shown in a position for sensing the core 10d, thereby representing the availability of the two cores 10c and 10d, it could be positioned to sense the core 10c adjacent the stop 41, or could be positioned to sense any other core in a line of cores held by the stop 41.

The controller 39 can be a conventional PLC (programmable logic controller), a programmed general-purpose personal computer, or any other suitable device. The controller 39 responds to the signal representing an available space on the conveyor 21, as generated by the space sensor 40, and to the signal representing an available heater core on the roller conveyor 30, as generated by the core sensor 42, to signal the actuator 37 to extend the rod 38 thereby lowering the discharge end 32 and actuating the stop 41 to release the core 10c onto the conveyor 21. The controller 39 coordinates the discharge of the core 10c from the inventory buffer with the speed of the conveyor 21 so that the core is discharged at the open space detected by the space sensor 40.

As shown in Fig. 4, the inventory buffer system 29 is provided with a pair of spaced apart guide rails 43 for maintaining a desired orientation of the heater cores until each is discharged onto the conveyor 21. The guide rails 43 extend in a direction of travel of the cores and are positioned above the roller conveyor 30 a distance greater than the thickness of the core 10 but less than the height of the center portion 18. The heater cores 10 are placed on the roller conveyor 30 with the braze clamp 16 facing upwardly and the ends 17 oriented in the direction of travel of the cores. Thus, the guide rails 43 cooperate with the center portion 18 to maintain the desired orientation of the core 10. The desired orientation is critical because the joints between the tubes 12 and the headers 14 will not be properly cleaned if the core 10 is not oriented properly in the aqueous degreaser.

As shown in the Fig. 5, ends 44 of the guides 43 closer to the machine 22 are angled apart to funnel a core 10g into a relatively narrow space between the remainder of the guides. Another core 10h is shown in the narrower spaced portion of the guides 43 which spacing is slightly greater than a width of the center portion 18 of the braze clamp 16. The guide rails 43 cooperate with the center portion 18 to maintain the core 10h in a desired orientation until that core is discharged onto the conveyor 21.

Referring to the Fig. 3, when the first production line is running at a maximum output rate, the speed of the conveyor 21 is sufficient to space heater cores discharged from the core build machine "CB1" a distance apart that provides enough room therebetween for a core from each of the machines "CB2" through "CB8". The start of the fabrication cycle for each machine 22 is coordinated so that, ideally, a steady stream of cores 10 is presented to the processes "downstream" from the core build machine "CB8". When one of the machines "CB1" through "CB7" fails to discharge a core at the end of a standard machine cycle, or when a core is removed, an open space becomes available for the discharge of a heater core from the inventory of one of the "downstream" machines. While each of the inventory buffer systems 29 can be programmed to fill any open space detected, the controllers 39 can also be individually programmed to only fill an open space associated with a selected one or more of the "upstream" machines 22.

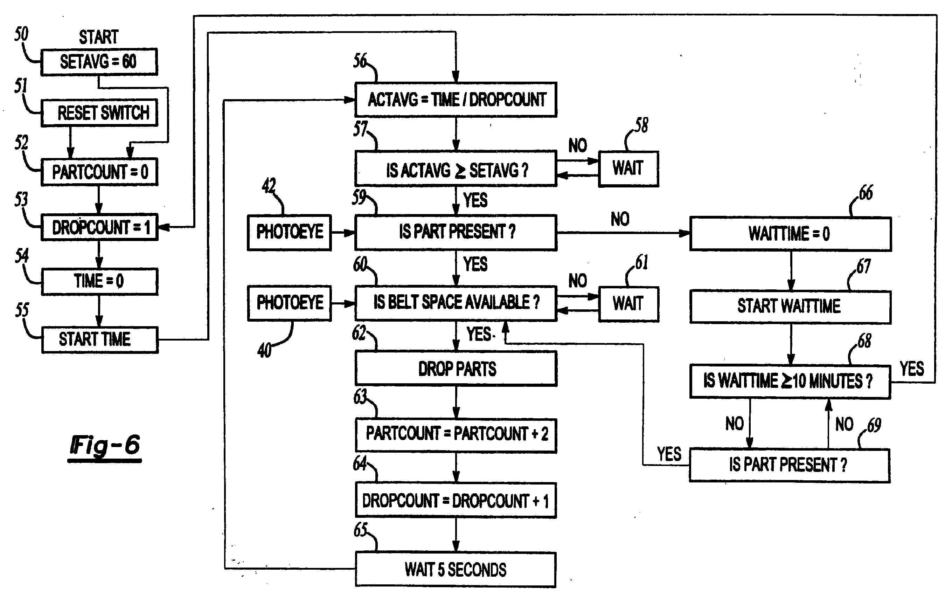

In the Fig. 6, there is shown a flow diagram of the method for controlling the inventory buffer system 29. The method is implemented in the programmable logic of the controller 39. The method starts at a command set 50 "SETAVG = 60" wherein the predetermined cycle time of the machine 22 is set to a value of sixty in seconds. A command set 51 "RESET SWITCH" also is provided and both command sets enter a command set 52 "PARTCOUNT = 0". Thus, starting through the command set 50 and resetting during operation through the command set 51 will cause the count of parts dropped or discharged from the roller conveyor to be set to zero in the command set 52.

The method then enters a command set 53 "DROPCOUNT = 1" wherein the number of drops is set to one. Next is a command set 54 "TIME = 0" wherein the running time during the production run is set to zero. The method enters a command set 55 "START TIME" wherein a clock of elapsed time is started. The method then enters a command set 56 "ACTAVG = TIME/DROPCOUNT" wherein the actual average cycle time in seconds is calculated by dividing the elapsed time by the number of drops. Next, a decision point 57 "IS ACTAVG > SETAVG?" compares the actual average cycle time "ACTAVG" with the predetermined cycle time "SETAVG". If the "ACTAVG" is less than the "SETAVG", the method branches at "NO" and enters a command set 58 "WAIT" in which it loops until the "ACTAVG" is greater than or equal to the "SETAVG", whereupon the method branches at "YES" and enters a command set 59 "IS PART PRESENT?". Thus, the method attempts to maintain the predetermined cycle time by waiting when the actual time is less and discharging a part from inventory when the actual time is more.

If a part is present as detected by a signal from the core sensor 42, the method branches at "YES" to a decision point 60 "IS BELT SPACE AVAILABLE?". If no space is available on the main conveyor, as detected by the space sensor 40, the method branches at "NO" and enters a command set 61 "WAIT" in which it loops until a space is available. When a space is available, the method branches at "YES" to a command set 62 "DROP PARTS" wherein the controller 39 causes two heater cores to be dropped from the movable section 33 onto the main conveyor. The method then enters a command set 63 "PARTCOUNT = PARTCOUNT + 2" to increment the number of parts dropped by two. Next, the method enters a command set 64 "DROPCOUNT = DROPCOUNT + 1" to increment the number of drops by one. The method enters a command set 65 "WAIT 5 SECONDS" to generate a five second delay before returning to the command set 56 to recalculate the actual average cycle time.

When no part is present, the method branches from the command set 59 at "NO" to a command set 66 "WAITTIME = 0" wherein the elapsed inactive time is set to zero. The method then enters a command set 67 "START WAITTIME" to start a clock of elapsed time. Next, the method enters a decision point 68 "IS WAITTIME > 10 MINUTES?". If the elapsed inactive time is greater than or equal to ten minutes, the method branches at "YES" and returns to the command set 53 to reset the drop count to one. If the elapsed inactive time is less than ten minutes, the method branches at "NO" to a decision point 69 "IS PART PRESENT?". If a part is present, the method branches at "YES" and returns to the decision point 60 to determine whether belt space is available. If no part is present, the method branches at "NO" back to the decision point 68 to check the elapsed inactive time.

In accordance with the provisions of the patent statutes, the present invention has been described in what is considered to represent its preferred embodiment. However, it should be noted that the invention can be practiced otherwise than as specifically illustrated and described without departing from its spirit or scope.

## Claims

1. An apparatus for delivering parts from a source to a destination on a main conveyor comprising:
a space sensor for sensing an available space on a main conveyor and generating a first signal representing the available space;
a storage conveyor positioned to receive parts from a source of the parts and selectively discharge the parts onto the main conveyor;
a part sensor for sensing one of the parts on the storage conveyor and generating a second signal representing the one part; and
a controller connected to said space sensor, said part sensor and said storage conveyor whereby said controller responds to said first signal and said second signal by actuating said storage conveyor to discharge at least the one part onto said main conveyor in the available space.

2. The apparatus according to claim 1 wherein said storage conveyor includes a pair of spaced apart guide rails extending parallel to a direction of travel of the parts for engaging and orienting the parts received from the source.

3. The apparatus according to claim 1 wherein the parts are heater cores each having a braze clamp and said guide rails engage the braze clamp.

4. The apparatus according to claim 1 wherein ends of said guide rails adjacent the source are angled apart.

5. The apparatus according to claim 1 wherein said storage conveyor is inclined downwardly from an upper entry end adjacent the source to a lower discharge end adjacent the main conveyor.

6. The apparatus according to claim 5 wherein said storage conveyor is a roller conveyor.

7. The apparatus according to claim 1 wherein said storage conveyor includes a movable section adjacent the main conveyor and an actuator attached to said movable section, said controller being connected to said actuator for moving said movable section from a first position to a second position to discharge the one part onto the main conveyor.

8. The apparatus according to claim 1 wherein said controller includes means for calculating an actual average cycle time by dividing a running time by a number a discharges from said storage conveyor and actuates said storage conveyor to discharge the one part when the actual average cycle time is at least equal to a predetermined cycle time.

9. The apparatus according to claim 1 wherein said controller includes means for counting a number of the parts discharged and a number of times said storage conveyor was actuated to discharge the parts.

10. A system for delivering parts from a plurality of sources to a destination comprising:
a main conveyor for moving a plurality of parts to a destination;
a plurality of sources of the parts;
a plurality of inventory buffer systems, each said inventory buffer system being associated with one of said sources for receiving the parts from said associated source and selectively discharging the parts onto said main conveyor;
each said inventory buffer system having an associated space sensor for sensing an available space on said main conveyor and generating a first signal representing the available space;
each said inventory buffer system having an associated part sensor for sensing the parts received from said associated source and generating a second signal representing the received parts; and
each said inventory buffer system having a controller connected to said associated space sensor and said associated part sensor whereby said controller responds to said first signal and said second signal to discharge at least one of the parts onto said main conveyor in the available space.

11. The parts delivery system according to claim 10 wherein each said inventory buffer system includes a roller conveyor inclined downwardly from an upper entry end adjacent said associated source to a lower discharge end adjacent said main conveyor.

12. The parts delivery system according to claim 11 wherein each said inventory buffer system includes a pair of spaced apart guide rails extending above said roller conveyor parallel to a direction of travel of the parts for engaging and orienting the parts received from said associated source.

13. The apparatus according to claim 12 wherein ends of said guide rails adjacent said associated source are angled apart.

14. The parts delivery system according to claim 11 wherein said roller conveyor includes a movable section adjacent said main conveyor and an actuator attached to said movable section, said controller being connected to said actuator for moving said movable section from a first position to a second position to discharge the parts onto said main conveyor.

15. The parts delivery system according to claim 10 wherein said controller includes means for calculating an actual average cycle time by dividing a running time by a number a discharges of the parts from said inventory buffer system and actuates said inventory buffer system to discharge at least one of the parts when the actual average cycle time is at least equal to a predetermined cycle time.

16. A method of delivering parts from a source to a destination on a main conveyor comprising the steps of:
a. providing a storage conveyor to receive parts from a source and selectively discharging the parts to a main conveyor to deliver the parts to a destination;
b. calculating an average cycle time for all previous discharges of the parts from the storage conveyor during a predetermined elapsed time;
c. sensing an available space on a main conveyor;
d. sensing one of the parts on the storage conveyor; and
e. actuating the storage conveyor to discharge the one part onto the main conveyor in the available space if the average cycle time is at least equal to a predetermined cycle time.

17. The method according to claim 16 including performing said steps a. through e. for each of a plurality of sources of the parts delivering the parts to the main conveyor.

18. The method according to claim 16 including aligning the parts in a predetermined orientation on the storage conveyor.

19. The method according to claim 16 including performing said step b. each time said step e. is performed.

20. The method according to claim 16 including resetting the predetermined time to zero when no part is sensed in said step d. during a predetermined wait time.
